# EUROPÄISCHE PATENTSCHRIFT

(11) **EP 3 764 511 B1**
(45) Veröffentlichungstag und Bekanntmachung des Hinweises auf die Patenterteilung: **17.09.2025**
(21) Anmeldenummer: 19185464.5
(22) Anmeldetag: 10.07.2019
(51) Int. Cl.: H02K 1/14, H02K 15/022, H01F 3/02, H01F 3/10, B21D 28/22

(54) **STATORBLECHPAKET MIT GEDRUCKTER ERWEITERUNG**
STATOR LAMINATION STACK WITH PRINTED EXTENSION
PAQUET DE TÔLES DE STATOR POURVU D'EXTENSION IMPRIMÉE

(43) Veröffentlichungstag der Anmeldung: 13.01.2021
(73) Patentinhaber: Innomotics GmbH, 90441 Nürnberg (DE)
(72) Erfinder: Bittner, Roland, 91522 Ansbach (DE); Hösle, Markus, 91058 Erlangen (DE)
(74) Vertreter: Michalski Hüttermann & Partner Patentanwälte mbB

(56) Entgegenhaltungen:
- EP-A1- 3 076 526
- WO-A2-2013/045142
- DE-A1- 102011 109 129
- JP-A- 2007 325 353
- JP-A- 2015 171 193

## Beschreibung

Die vorliegende Erfindung betrifft ein Blechpaket für eine elektrische Maschine mit einem Grundelement, welches eine Aneinanderreihung von Grund-Dynamoblechen und mehrere an seinem Umfang verteilte Zähne zum Tragen jeweils einer Wicklung aufweist. Darüber hinaus betrifft die vorliegende Erfindung eine elektrische Maschine sowie eine Maschinenfamilie mit einem derartigen Blechpaket. Ferner bezieht sich die vorliegende Erfindung auch auf ein Verfahren zum Herstellen eines Blechpakets für eine elektrische Maschine durch Ausstanzen oder Ausschneiden von Grund-Dynamoblechen und Bilden eines Grundelements durch Aneinanderreihung der gestanzten oder ausgeschnittenen Grund-Dynamobleche, wobei das Grundelement mehrere an seinem Umfang verteilte Zähne zum Tragen jeweils einer Wicklung aufweist.

Elektrische Maschinen wie etwa Motoren und Generatoren, besitzen in der Regel einen Stator mit einem Blechpaket. Das Blechpaket verfügt meist über zahlreiche Zähne für einzelne Wicklungen sowie ein ringförmiges Joch, das sämtliche Zähne miteinander verbindet. Ein derartiges Blechpaket wird typischerweise aus einer Vielzahl von Blechen paketiert, die aus einem Elektroblech bzw. Dynamoblech mit hoher Permeabilität ausgestanzt bzw. ausgeschnitten sind.

Für jeden Motortyp ist in der Regel ein eigener Blechschnitt für den Stator notwendig. Entsprechend dem Blechschnitt ist jedes Statorblech ausgestanzt. Dies führt bei einer hohen Anzahl an Motortypen zu einer ebenso hohen Anzahl von zu stanzenden Blechschnittvariationen. Der Grund hierfür liegt unter anderem darin, dass für unterschiedliche Achshöhen sowie für unterschiedliche Auslegungen (Leistung, Oberwellen etc.) unterschiedliche Statorblechschnitte notwendig sind. Die Handhabung dieser Vielzahl an Statorblechschnitten kann insbesondere eine logistische Herausforderung darstellen. Eine weitere Herausforderung kann es bedeuten, wenn ein unveränderliches Kühlkonzept für eine blechschnittabhängige Kühlung vorgesehen werden soll. Auch andere Probleme könnten sich für die Vielzahl von Motortypen mit eigenem Blechschnitt ergeben. Könnte bei einer hohen Anzahl an Motortypen die Varianz der zu stanzenden Blechschnitte reduziert werden, wäre dies unter anderem bezüglich der Umrüstzeiten der Stanzwerkzeuge vorteilhaft. In JP 2007325353 A, JP 2015171193 A und EP 3076526 A1 wird ein Blechpaket für eine elektrische Maschine beschrieben, dem keine Elemente durch additive Verfahren hinzugefügt wurden.

Die Aufgabe der vorliegenden Erfindung besteht somit darin, die Anzahl an Blechschnitten für die Statoren unterschiedlicher Typen von elektrischen Maschinen möglichst gering zu halten.

Erfindungsgemäß wird diese Aufgabe durch ein Blechpaket und ein Verfahren zum Herstellen eines Blechpakets gemäß den unabhängigen Ansprüchen 1 und 14 gelöst. Vorteilhafte Weiterbildungen der Erfindung ergeben sich aus den Unteransprüchen.

Erfindungsgemäß ist demnach ein Blechpaket für eine elektrische Maschine mit einem Grundelement vorgesehen, welches eine Aneinanderreihung von Grund-Dynamoblechen und mehrere an seinem Umfang verteilte Zähne zum Tragen jeweils einer Wicklung aufweist. Bei der elektrischen Maschine handelt es sich vorzugsweise um einen Elektromotor oder einen Generator. Das Blechpaket kann ein Statorblechpaket oder ein Rotorblechpaket sein. Ebenso kann es sich bei dem Blechpaket um eine Komponente eines Aktivteils eines Linearmotors handeln.

Das Blechpaket weist in erster Linie ein "Grundelement" auf, das das eigentliche Paket aus Dynamoblechen darstellt. In ihm sind sogenannte "Grund-Dynamobleche" aneinandergereiht bzw. paketiert. Das Grundelement weist also einen Stapel von Grund-Dynamoblechen auf, von denen jedes ein z.B. auf ähnliche Weise ausgestanztes Dynamoblech ist. Der Name "Grund-Dynamoblech" bedeutet also lediglich, dass damit das "Grundelement" gebildet ist. Das geblechte Grundelement besitzt mehrere Zähne, die zum Tragen jeweils einer Wicklung vorgesehen sind. Diese Zähne können beispielsweise am Umfang des Grundelements insbesondere gleich verteilt sein. Generell können die Zähne an einer Wirkseite des Grundelements verteilt angeordnet sein. Prinzipiell kann jeder Zahn einen Zahnschaft und einen Zahnkopf und gegebenenfalls einen speziell geformten Zahnfuß aufweisen. Das Grundelement stellt das Grundgerüst für das Blechpaket dar und besitzt wegen der Dynamobleche eine hohe Permeabilität und damit auch eine hohe magnetische Qualität.

Um nun die Anzahl der Blechschnitte für unterschiedliche Typen von elektrischen Maschinen gering zu halten, besteht der Grundgedanke der Erfindung darin, das Grundelement für mehrere Typen von elektrischen Maschinen verwenden zu können. Magnetisch weniger wichtige Teile des Grundelements, wie etwa Randbereiche, können je nach Durchmesser der elektrischen Maschine, Effizienz, Einbauraum etc. durch ein 3-D-Druckverfahren bzw. allgemein ein generatives Fertigungsverfahren angepasst bzw. erweitert werden. So kann ein Erweiterungsabschnitt an einem der Zähne des Grundelements durch das generative Fertigungsverfahren an dem Zahn angeformt werden. Gegebenenfalls kann der Erweiterungsabschnitt von dem Grundelement vollständig umgeben bzw. in dieses integriert sein. So können speziell der Zahnschaft und/oder ein Jochrückenabschnitt und/oder ein Zahnkopfbereich durch den Erweiterungsabschnitt ergänzt bzw. angepasst werden.

Der oder die Erweiterungsabschnitte können vor und/oder nach der Paketierung eingefügt werden.

Das generative Fertigungsverfahren kann auch als additive Fertigung bzw. als Rapid Prototyping bezeichnet werden. Auf der Basis von Datenmodellen werden dabei aus formlosen (Flüssigkeiten, Gelen, Pasten, Pulver und Ähnlichem) oder formneutralen (bandförmigen, drahtförmigen, blattförmigen etc.) Materialien mittels chemischer und/oder physikalischer Prozesse Körper gefertigt bzw. ergänzt.

Entsprechend einer Ausgestaltung besteht der Erweiterungsabschnitt aus mehreren Einzelabschnitten bzw. weist mehrere Einzelabschnitte auf, von denen jeder einzelne an ein jeweiliges der Grund-Dynamobleche separat durch das generative Fertigungsverfahren angeformt ist. Dies bedeutet, dass an jedes Grund-Dynamoblech durch das generative Fertigungsverfahren ein Einzelabschnitt angedruckt bzw. angeformt ist und die mehreren Einzelabschnitte durch die Aneinanderreihung bzw. Paketierung den Erweiterungsabschnitt bilden. Damit können die Einzelabschnitte an jedem Blech einzeln geformt werden. Insbesondere kann so die Stärke der Einzelabschnitte variiert werden. Beispielsweise kann ein additiv angeformter Einzelabschnitt eine andere Dicke besitzen als ein Grund-Dynamoblech. Auch kann sich die Stärke eines Einzelabschnitts beispielsweise nach außen hin vermindern.

Der Erweiterungsabschnitt kann aus einem magnetisch leitfähigen Material gebildet sein oder magnetisch leitfähige Partikel aufweisen. Auf diese Weise kann das Grundelement durch einen bzw. mehrere magnetisch wirksame Erweiterungsabschnitte ergänzt werden. Gegebenenfalls handelt es sich bei dem Material um das gleiche Material, aus dem die Grund-Dynamobleche bestehen. Ebenso können die magnetisch leitfähigen Partikel aus dem gleichen Material gebildet sein wie die Grund-Dynamobleche. Prinzipiell kann das Material der Erweiterungsabschnitte aber auch unmagnetisch sein, so dass der Erweiterungsabschnitt lediglich Stützfunktion besitzt. Gegebenenfalls kann das Material des Erweiterungsabschnitts auch so gewählt sein, dass es besondere physikalische Eigenschaften wie hohe Wärmeleitfähigkeit, geringe Dichte und so weiter besitzt.

In einer vorteilhaften Ausgestaltung weist der eine der Zähne einen Jochabschnitt und davon abstehend einen Zahnschaft auf, wobei der mindestens eine Erweiterungsabschnitt an dem Jochabschnitt und/oder dem Zahnschaft angeformt ist. Auf diese Weise kann die Form eines Zahnschafts verändert und insbesondere verbreitert werden. Speziell kann an beiden Seiten des Zahnschafts Material aufgetragen werden, so dass dieser eine größere Breite besitzt. Alternativ oder zusätzlich kann auch der Jochabschnitt eines Zahns verändert, angepasst bzw. ergänzt werden. So kann beispielsweise der Jochabschnitt eines Zahns mit dem Jochabschnitt eines benachbarten Zahns durch das generative Fertigungsverfahren verbunden werden. Hierdurch können beispielsweise zahlreiche Jochabschnitte vieler Zähne zu einem ringförmigen Joch verbunden werden.

Des Weiteren kann vorgesehen sein, dass der eine der Zähne einen Zahnkopf aufweist und der Erweiterungsabschnitt zumindest einen Teil des Zahnkopfs bildet. Dabei kann ein Teil des Zahnkopfs ohne spezielle Formgebung lediglich das distale Ende des Zahnschafts darstellen. Ein speziell geformter bzw. vollständiger Zahnkopf entsteht dann erst durch den Erweiterungsabschnitt, der als Teil des Zahnkopfes an ein einteilig mit dem Zahnschaft verbundenen anderen Zahnkopfteil angeformt wird. Hier lassen sich in Abhängigkeit von dem Typ der elektrischen Maschine unterschiedliche Zahnköpfe generativ formen.

In einer besonderen Weiterbildung des Blechpakets kann vorgesehen sein, dass in dem Erweiterungsabschnitt ein Kühlkanal ausgebildet ist. Dies bedeutet, dass durch das generative Fertigungsverfahren erstmalig oder zusätzlich Kühlkanäle in das bzw. an das Grundelement angebracht werden. Beispielsweise können in dem Erweiterungsabschnitt eine oder mehrere Kühlkanäle untergebracht werden. Insbesondere kann es sich um runde Kühlkanäle handeln, deren Durchmesser nach Bedarf gewählt ist. Auch kann der Erweiterungsabschnitt etwaige Anschlusskomponenten für ein Kühlsystem aufweisen. Vorteilhafterweise ist in diesem Fall das Material des bzw. der Erweiterungsabschnitte mit hoher Wärmeleitfähigkeit gewählt. Insbesondere kann das Material auch auf das Kühlmedium abgestimmt sein.

Gemäß einer weiteren Ausführungsform des Blechpakets ist vorgesehen, dass der Jochabschnitt und/oder der Zahnschaft jeweils eine Aussparung aufweisen, welche durch den Erweiterungsabschnitt ganz oder teilweise gefüllt ist. So kann beispielsweise das Grundelement eine Aussparung aufweisen, die bei einem Typ der elektrischen Maschine beispielsweise aus Gewichtsgründen ungefüllt bleibt. Bei einem oder mehreren anderen Typen der elektrischen Maschine wird die Aussparung durch den Erweiterungsabschnitt gegebenenfalls auch mit einem oder mehreren Kühlkanälen gefüllt. Dabei kann der Füllungsgrad wieder vom Typ der elektrischen Maschine abhängen. Die Aussparung in dem Jochabschnitt bzw. dem Zahnschaft kann beispielsweise keilförmig, kreissegmentförmig oder trapezförmig sein.

Insbesondere kann die Aussparung asymmetrisch zu einer Mittelachse des jeweiligen Zahnschafts angeordnet sein. Dies bedeutet, dass sie nicht zwangsläufig symmetrisch zur Zahnmitte sein muss. Darüber hinaus kann die Aussparung auch lediglich dazu dienen, eine bessere mechanische Stabilität für den Erweiterungsabschnitt zu erhalten. So ist es beispielsweise günstig, wenn der Zahnschaft eine Aussparung aufweist, in und um die herum das Material für einen Zahnkopf gedruckt wird. Dabei kann auch vorgesehen sein, dass die eine oder die mehreren Aussparungen Hinterschneidungen aufweisen, um etwaige Formschlüsse herzustellen.

In einer weiteren vorteilhaften Ausgestaltung ist die Aussparung mit mehreren verschiedenen Materialien gefüllt. Generell kann der bzw. die Erweiterungsabschnitte aus mehreren verschiedenen Materialien gedruckt bzw. gefertigt werden. Eine derartige Materialkomposition des Erweiterungsabschnitts kann an die physikalischen Anforderungen des Blechpakets angepasst werden.

Entsprechend einer weiteren Ausführungsform ist der Erweiterungsabschnitt als Befestigungselement ausgebildet. Das Befestigungselement kann dazu dienen, das Blechpaket beispielsweise an einer Gehäusewand zu befestigen. Hierbei lässt sich das Befestigungselement leicht an das jeweils eingesetzte Gehäuse anpassen. Falls die elektrische Maschine gehäuselos ist, kann das Befestigungselement, das durch das generative Fertigungsverfahren an das Blechpaket angebracht wurde, auch dazu dienen, eine Befestigungsmöglichkeit auf einem Fundament, einem Träger und dergleichen zu schaffen. Bei einer weiteren vorteilhaften Ausgestaltung kann mit Hilfe des Erweiterungsabschnitts ein Sensor in die Aussparung eingebettet sein. So können beispielsweise ein Magnetsensor, ein Temperatursenor und dergleichen in das Blechpaket integriert werden. Dabei kann der Erweiterungsabschnitt als reines Halteelement aber auch als Übertragungselement für Wärme oder elektromagnetische Wellen dienen.

Ferner kann vorgesehen sein, dass an den Jochabschnitt des einen der Zähne unmittelbar ein weiterer Jochabschnitt eines weiteren der Zähne angrenzt, und der Erweiterungsabschnitt einen Keil zwischen dem Jochabschnitt und dem weiteren Jochabschnitt bildet. So kann beispielsweise ein Statorblechring aus einem linearen Blechabschnitt ausgestanzt werden, wobei die einzelnen Jochabschnitte nur über einen schmalen Steg miteinander verbunden sind. Die benachbarten Jochabschnitte können dann um den jeweiligen Steg gebogen werden, so dass sich das jeweilige ringförmige Blech ergibt. Die beim Biegen sich öffnenden Dreiecke können schließlich durch das generative Fertigungsverfahren gefüllt werden. Damit ergibt sich ein mechanisch stabiles Ringblech.

Weiterhin kann eine elektrische Maschine mit einem Blechpaket der geschilderten Art, insbesondere einem Statorblechpaket, vorgesehen sein. Bei der elektrischen Maschine kann es sich speziell um einen Elektromotor und insbesondere um eine Synchronmaschine, eine Asynchronmaschine oder eine Reluktanzmaschine handeln.

Des Weiteren kann erfindungsgemäß eine Maschinenfamilie mit mindestens zwei unterschiedlichen Maschinen der genannten Art bereitgestellt werden. Die Maschinenfamilie besitzt also eine erste elektrische Maschine und eine zweite elektrische Maschine mit dem erfindungsgemäßen Blechpaket, wobei beide elektrischen Maschinen das gleiche Grundelement, aber unterschiedliche Erweiterungsabschnitte aufweisen. Dies bedeutet, dass beide elektrische Maschinen auf dem gleichen Stanzblechpaket beruhen, wobei unterschiedliche Erweiterungsabschnitte an die Blechpakete angeformt sind. So kann beispielsweise die erste elektrische Maschine einen dickeren Zahnschaft besitzen als die zweite elektrische Maschine. In einem anderen Beispiel ist bei der ersten elektrischen Maschine eine Aussparung mit Kühlkanälen gefüllt, während bei der zweiten elektrischen Maschine die Aussparung ohne Kühlkanäle gefüllt ist. Das Merkmal "unterschiedliche Erweiterungsabschnitte" bedeutet aber auch, dass bei der einen elektrischen Maschine ein Erweiterungsabschnitt vorhanden ist, aber bei der anderen elektrischen Maschine nicht. So kann beispielsweise die erste elektrische Maschine keinen speziell ausgeformten Zahnkopf besitzen, während die zweite elektrische Maschine als Erweiterungsabschnitt einen speziell ausgeformten Zahnkopf am distalen Ende des Zahnschafts aufweist. Ähnliches kann auch für die Ausgestaltung des Zahnschafts gelten. Während bei der einen elektrischen Maschine am Zahnschaft keine Erweiterung generativ angeformt ist, kann eine solche Erweiterung am Zahnschaft der anderen elektrischen Maschine vorgesehen sein.

Obige Aufgabe wird erfindungsgemäß auch gelöst durch ein Verfahren zum Herstellen eines Blechpakets für eine elektrische Maschine durch
- Ausstanzen oder Ausschneiden von Grund-Dynamoblechen und
- Bilden eines Grundelements durch Aneinanderreihung der ausgestanzten oder ausgeschnittenen Grund-Dynamobleche, wobei
- das Grundelement mehrere Zähne zum Tragen jeweils einer Wicklung aufweist sowie durch Anformen eines Erweiterungsabschnitts an einen der Zähne des Grundelements durch ein generatives Fertigungsverfahren.

Die vorteilhaften Ausprägungen und Variationsmöglichkeiten, die oben im Zusammenhang mit dem Blechpaket geschildert wurden, gelten sinngemäß auch für das erfindungsgemäße Verfahren. In diesem Fall stellen die entsprechenden funktionellen Merkmale des Blechpakets die jeweiligen Verfahrensmerkmale dar.

Die vorliegende Erfindung wird nun anhand der beigefügten Zeichnungen näher erläutert, in denen zeigen
- FIG 1: ein Statorblech bzw. ein Statorblechpaket in der Draufsicht;
- FIG 2: einen Zahn eines Statorblechs mit Erweiterungsabschnitten gemäß einer ersten Ausführungsform;
- FIG 3: einen Zahn eines Statorblechs mit Erweiterungsabschnitten gemäß einer zweiten Ausführungsform;
- FIG 4: einen Zahn eines Statorblechs mit Erweiterungsabschnitten gemäß einer dritten Ausführungsform;
- FIG 5: ein Statorblech mit Erweiterungsabschnitten gemäß einer vierten Ausführungsform;
- FIG 6: einen linearen, gestanzten Blechstreifen mit mehreren Zähnen;
- FIG 7: einen Ausschnitt von FIG 6 zwischen zwei Zähnen und
- FIG 8: einen Teil eines Statorrings aus dem linearen Blech von FIG 6 und eingefügten Erweiterungsabschnitten.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Kombinationen realisiert werden können.

Zur Herstellung eines Blechpakets und insbesondere eines Statorblechpakets für eine elektrische Maschine (z.B. Asynchronmaschine, Synchronmaschine, Reluktanzmaschine etc.) werden nicht nur (gestanzte) Bleche in Umfangsrichtung und/oder axial zu einem Grundelement aneinandergereiht. Zusätzlich werden Teile des Blechpakets beispielsweise durch ein 3-D-Druckverfahren gedruckt. Es werden also an das Grundelement durch ein generatives Fertigungsverfahren ein oder mehrere Erweiterungsabschnitte angeformt.

Auf diese Weise kann eine hohe Varianz von zum Beispiel Motortypen bereitgestellt werden, ohne von Seiten des Herstellers die Varianz der gestanzten Blechschnitte zu erhöhen. Somit ergibt sich der Vorteil einheitlicher Blechschnitte für unterschiedliche Achsgrößen bzw. für ein gewisses Spektrum von Achshöhen (zum Beispiel Achshöhen 15 bis 350 Millimeter; 360 bis 1000 Millimeter; größer 1000 Millimeter). Außerdem ergibt sich der Vorteil von einheitlichen Blechschnitten für unterschiedliche Auslegungen, beispielsweise bezüglich Leistung, Oberwellen etc. Ein weiterer Vorteil kann darin bestehen, dass mit dem generativen Fertigungsverfahren ein adaptives Kühlkonzept realisiert werden kann.

In einer Ausgestaltung der Erfindung weist also ein Statorblechpaket bzw. ein Stator ein Grundelement auf. Das Grundelement seinerseits weist eine insbesondere axiale Aneinanderreihung von Blechen bzw. Dynamo-blechen auf. Vorteilhaft weisen die Bleche eine hohe Permeabilität auf und sind somit von hoher Qualität. Dieses Grundelement wird durch ein generatives Fertigungsverfahren bzw. AM (Additiv Manufacturing) wie beispielsweise 3-D-Druck ergänzt. So können durch AM beispielsweise Randbereiche des jeweiligen Blechs und/oder des Statorblechpakets individuell gestaltet werden.

Für den AM-Prozess wird das Grundelement beispielsweise in einer Hilfskonstruktion fixiert. Denkbar ist stattdessen oder ergänzend eine Stanzpaketierung des Grundelements, so dass das Grundelement von vornherein eine Grundstabilität aufweist, die die Handhabung bzw. den weiteren Herstellungsprozess vereinfacht. Durch AM (nachfolgend stellvertretend für generative Fertigungsverfahren) kann beispielsweise der Durchmesser des Stators verändert werden. Abhängig vom erwarteten maximalen Fluss kann auch das Joch des Stators vergrößert werden, um zu vermeiden, dass das Joch in Sättigung gehen kann. Dies bedeutet, dass AM auch zur Leistungsanpassung der elektrischen Maschine herangezogen werden kann (Effizienzbetrachtung). Neben dem Joch kann aber auch ein Zahnschaft, ein Zahnkopf und/oder ein Kühlmittel durch AM angepasst werden. Auch eine Gewichtsoptimierung ist möglich. So kann bei gleichem Motorgehäuse der Stator einer Maschine mit geringerer maximaler Leistung leichter ausgeführt werden, aber dennoch an einen großen Einbauraum innerhalb eines großen Gehäuses angepasst sein.

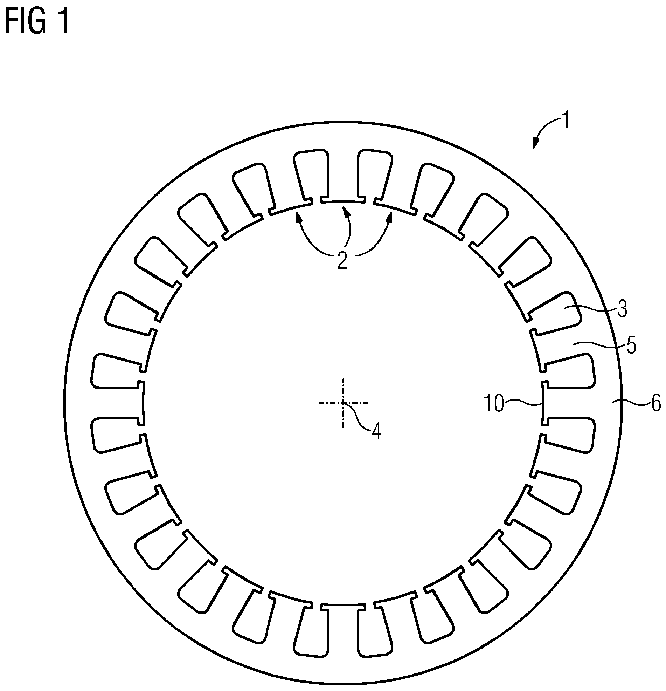

Im Folgenden werden anhand der beigefügten Figuren einzelne konkrete Beispiele aufgezeigt. So zeigt beispielsweise FIG 1 einen klassischen Blechschnitt 1 eines Stators in der Draufsicht. Ein solcher Blechschnitt 1 ist beispielsweise aus einem Dynamoblech ausgestanzt. Axial übereinander gestapelt ergibt eine Vielzahl solcher Blechschnitte ein Blechpaket, das hier auch als Grundelement bezeichnet wird.

Eine elektrische Maschine einer Maschinenfamilie kann mit einem solchen Grundelement bzw. Statorblechpaket in unveränderter Form gefertigt werden. Bei einem weiteren Mitglied der Maschinenfamilie kann das Blechpaket entsprechend den nachfolgenden Beispielen durch ein generatives Fertigungsverfahren verändert bzw. mit entsprechenden Erweiterungsabschnitten ergänzt werden. Damit ergeben sich für die Maschinenfamilie basierend auf dem Grundelement unterschiedliche Typen von elektrischen Maschinen bzw. Motoren.

Das in FIG 1 gezeigte Blech bzw. Blechpaket in der Draufsicht eignet sich für Zahnwicklungen, verteilte Wicklungen (einschichtig oder mehrschichtig), Schleifenwicklungen und dergleichen. Der Einfachheit halber wird im Weiteren stellvertretend für ein Blechpaket jeweils nur ein einzelnes Blech bzw. ein Blechschnitt 1 betrachtet.

Ein Blechschnitt 1 besitzt eine Vielzahl an Zähnen **2,** die hier radial nach innen ragen. Die Zähne 2 sind durch Nuten 3 voneinander getrennt. Der Blechschnitt 1 besitzt hier insgesamt eine ringförmige Gestalt, wobei die einzelnen Zähne 2 zu einer zentralen Achse 4 weisen.

Jeder Zahn besitzt einen Zahnschaft 5 und einen Jochabschnitt 6. Die einzelnen Jochabschnitte 6 aller Zähne fügen sich zu einem geschlossenen, ringförmigen Joch. Von jedem Jochabschnitt 6 eines Zahns steht der jeweilige Zahnschaft 5 des Zahns senkrecht zur Achse 4 gerichtet ab. Am distalen Ende, das heißt dem nach innen weisenden Ende, jedes Zahnschafts 5 befindet sich ein Zahnkopf 10, der besonders ausgeformt sein kann oder lediglich das Ende des Zahnschafts 5 darstellt.

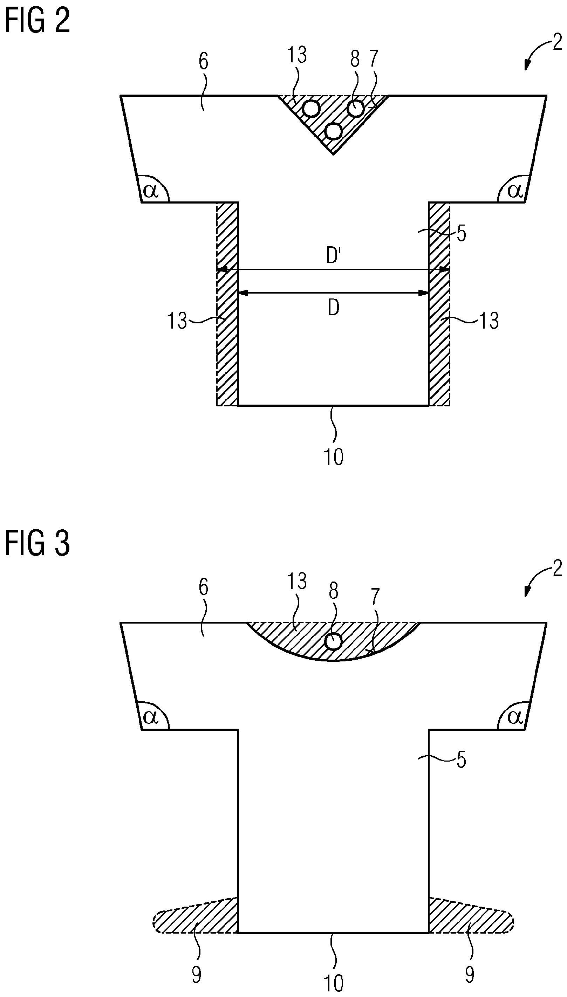

FIG 2 zeigt einen einzelnen Zahn 2 eines Blechschnitts. Der Zahnschaft 5 steht von dem Jochabschnitt 6 senkrecht ab. Der Zahnkopf 10 ist hier nicht speziell geformt und endet gerade ohne Aufweitung am Zahnschaft 5. Die Grenzen des Jochabschnitts 6 in radialer Richtung und in Umfangsrichtung können einen Stanzwinkel α einnehmen. Dieser Stanzwinkel ist maßgeblich für die Bildung eines rundlichen Blechs gemäß FIG 1.

Die Breite D des Zahnschafts 5 kann durch AM beispielsweise auf D' einseitig oder zweiseitig erhöht werden. Dies kann beispielsweise in Abhängigkeit von dem Strom, der Spannung und/oder dem magnetischen Fluss der entworfenen elektrischen Maschine erfolgen. Durch AM wird hier also beispielsweise seitlich an den Zahnschaft 5 ein Erweiterungsabschnitt 13 angeformt bzw. angedruckt. Im konkreten Beispiel von FIG 2 sind sogar an beiden Seiten des Zahnschafts 5 solche Erweiterungsabschnitte 13 angebracht.

Darüber hinaus weist in dem vorliegenden Beispiel der Jochabschnitt 6 im Grundelement eine Aussparung 7 auf. Diese Aussparung 7 befindet sich in einem Bereich reduzierten Flusses. Abhängig vom erwarteten Maximalfluss kann die Aussparung 7 im Hinblick auf die Sättigung durch AM mit einem flussführenden Material gefüllt werden. Sie kann teilweise oder vollständig mit einer solchen Füllung gefüllt sein, die ebenfalls einen Erweiterungsabschnitt 13 darstellt.

Abhängig von der benötigten Kühlung können durch AM Kühlkanäle 8 in unterschiedlicher Anzahl und Form in dem Erweiterungsabschnitt 13 ausgebildet werden. Dies gilt nicht nur für die Füllung der Aussparung 7, sondern auch für die Erweiterungsabschnitte 13 an dem Zahnschaft 5.

Die Bereiche des Blechs, welche durch AM erstellt werden, das heißt die Erweiterungsabschnitte 13, sind erfindungsgemäß schichtartig ausgebildet, um Verluste durch Wirbelströme zu reduzieren.

Die vorgebbare Schichtung kann der Schichtung der Elektrobleche entsprechen oder von dieser unterschiedlich sein (zum Beispiel weniger Schichten, indem dickere Schichten realisiert werden). An den Rändern der Zähne 2 sind dabei auch wesentlich geringere Schichtdicken als die Blechstärke durch den AM-Prozess möglich, so dass dadurch die Wirbelstromverluste weiter reduziert werden können. So können beispielsweise durch AM-Prozesse ohne Weiteres Schichtdicken im µm-Bereiche realisiert werden.

FIG 3 zeigt wie FIG 2 lediglich einen einzigen Zahn 2 eines Statorblechs bzw. eines Statorblechpakets. Insbesondere kann er Teil eines Blechschnitts gemäß FIG 1 sein. Der Zahn 2 besitzt einen Zahnschaft 5, einen Jochabschnitt 6 und einen Zahnkopf 10. Wie in dem Beispiel von FIG 2 ist ein Teil des Zahnkopfs 10 des Zahns 2 in seiner gestanzten Form zunächst gerade, so dass der Zahnschaft 5 und sein distales Ende, nämlich der Teil des Zahnkopfs 10, rechteckförmig gestaltet sind. Der Teil des Zahnkopfs 10 wird nun durch AM erweitert. Damit entstehen beispielsweise Zahnkopferweiterungen 9 als weitere Teile des Zahnkopfs an beiden gegenüberliegenden Seiten des mittleren Teils des Zahnkopfs 10, die ebenfalls Erweiterungsabschnitte darstellen. Diese Zahnkopferweiterungen 9 stehen im Wesentlichen senkrecht von dem Zahnschaft 5 ab. Damit kann eine Wicklung formschlüssig zwischen Joch 6 und Zahnkopferweiterung 9 gehalten werden. Des Weiteren können in den Zahnkopferweiterungen 9 magnetisch leitfähige Partikel vorgesehen werden, um das Luftspaltfeld im Nutschlitzbereich zusätzlich zu optimieren.

Die Form und Größe des Zahnschafts kann abhängig vom Motortyp (Leistung, Drehzahl, Oberwellen, Rastung, Effizienz, Gewicht, Dauerlast, Spitzenlast, etc.) ausgeführt werden. Durch das AM kann sich der Querschnitt des Stators über die Längsausdehnung des Motors ändern. Damit sind die Nutschlitze in ihrem axialen Verlauf und in ihrer Dicke zusätzlich einstellbar.

Anstelle der dreieckigen Aussparung gemäß FIG 2 besitzt der Zahn 2 von FIG 3 in seinem Joch 6 gegenüber dem Zahnschaft 5 eine kreissegmentförmige Aussparung 7. Diese wird wiederum durch AM oder ein anderes generatives Fertigungsverfahren ganz oder teilweise gefüllt. Im Beispiel von FIG 3 wurde die Aussprung 7 komplett mit einem Erweiterungsabschnitt 13 gefüllt. Durch ihn verläuft im vorliegenden Beispiel lediglich ein einziger Kühlkanal 8.

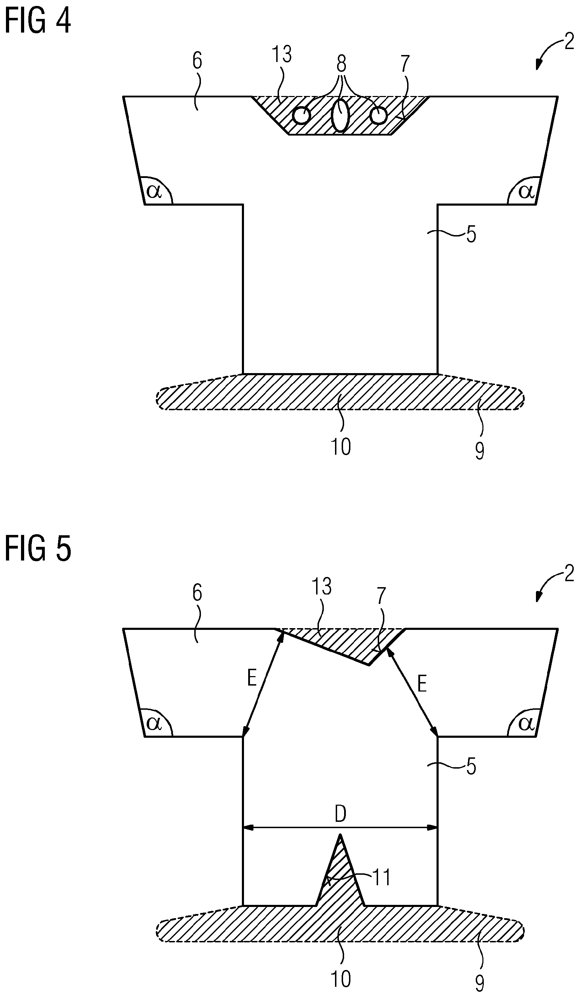

FIG 4 zeigt eine weitere Ausführungsform eines Zahns 2 eines Statorblechs bzw. Statorblechpakets. Während der Zahnkopf 10 im Beispiel von FIG 3 am distalen Ende mit dem Blechschnitt endet, wurde in dem Beispiel von FIG 4 der Zahnkopf 10 auch in radialer Richtung (vergleiche runder Blechschnitt 1 von FIG 1) erweitert. Die entsprechend durch AM geformte Zahnkopferweiterung 9, die einen Teil des Zahnkopfes darstellt, steht demnach nicht nur im Wesentlichen senkrecht von dem Zahnschaft 5 ab, sondern verlängert diesen im Zahnkopfbereich. Damit kann der Abstand zwischen Stator und Rotor variiert werden.

Auch im vorliegenden Fall weist der Jochabschnitt eine Aussparung 7 gegenüber dem Zahnschaft 5 auf. Die Aussparung 7 ist hier trapezförmig ausgebildet. Sie ist hier ebenfalls durch AM unter Bildung eines Erweiterungsabschnitts 13 vollständig gefüllt. In ihr sind hier drei Kühlkanäle unterschiedlichen Querschnitts vorgesehen. Z.B. befinden sich in dem Erweiterungsabschnitt 13 zwei runde Kühlkanäle 8 und ein ovaler Kühlkanal 8. Die Form der Kühlkanäle 8 kann jedoch beliebig variiert werden.

FIG 5 zeigt eine weitere Ausführungsform eines Zahns 2 eines Statorblechs bzw. eines Statorblechpakets für eine elektrische Maschine. Neben der Aussparung 7 im Joch ist hier auch eine Aussparung 11 im Zahnkopf 10 bzw. Zahnschaft 5 vorgesehen, welche durch AM zumindest teilweise gefüllt werden kann. Beide Aussparungen 7 und 11 sind hier keil- bzw. dreieckförmig gewählt. Die Zahnkopferweiterung 9, die einen mittels des generativen Fertigungsverfahrens angeformten Erweiterungsabschnitt ebenso wie der Erweiterungsabschnitt 13 am Jochabschnitt 6 darstellt, erstreckt sich im vorliegenden Fall sowohl in Umfangsrichtung als auch in radialer Richtung über den Zahnschaft 5 hinaus und wegen der Aussparung 11 sogar in den Zahnschaft 5 hinein.

Die Geometrie und Anzahl der Aussparungen 7, 11 in dem Zahn 2 können beliebig variiert werden. Ebenso kann die Anzahl der Kühlkanäle 8 in den Aussparungen 7, 11 bzw. in dem Erweiterungsabschnitten 13 und 9 an die jeweiligen Gegebenheiten angepasst werden. Im Einzelfall müssen die Aussparungen 7, 11 auch nicht vorgesehen bzw. nicht gefüllt sein. Dadurch lassen sich sowohl elektrische/magnetische Eigenschaften wie auch mechanische Eigenschaften anpassen und ändern. Entscheidende Maße können die Dicke D des Zahnschafts 5 oder die Weite E zwischen der Aussparung 7 und Jochabschnitt-Zahnschaft-Kante für den magnetischen Fluss sein. Diese lassen sich durch entsprechende Erweiterungsabschnitte variieren.

Die Aussparungen 7, 11 können symmetrisch und/oder asymmetrisch ausgebildet sein. Eine asymmetrische Aussparung kann zum Beispiel bei einer bevorzugten Drehrichtung vorteilhaft sein.

Durch AM kann ferner eine Aussparung mit gleichen oder unterschiedlichen Materialien zumindest teilweise gefüllt sein. Außerdem können durch AM unterschiedliche Aussparungen mit unterschiedlichen Materialien gefüllt werden. Die Materialien können sich z.B. bezüglich Gewicht, Permeabilität und/oder elektrischer wie auch thermischer Leitfähigkeit unterscheiden.

Mit Hilfe der AM können auch Befestigungselemente an den Stator angebracht werden (in den Figuren nicht dargestellt). Darüber hinaus können durch AM auch Sensoren (z.B. Hallsensor, Temperatursensor, Feuchtigkeitssensor und so weiter) in den Stator eingebettet werden (in den Figuren ebenfalls nicht dargestellt).

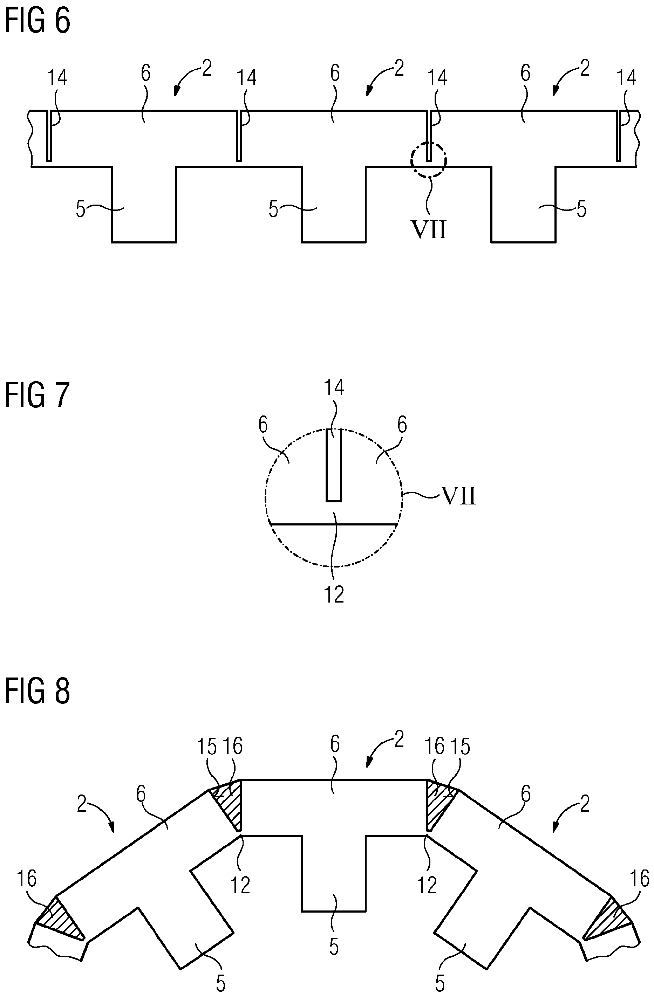

Anhand der FIG 6 bis 8 wird nun ein spezielles Verfahren vorgestellt, mit dem ein entsprechend spezifisches Statorblechpaket gewonnen werden kann. Dazu zeigt FIG 6 eine lineare Aneinanderreihung von Zähnen 2. Zwischen ihnen befinden sich Kerben 14. Die Kerben 14 können hier insbesondere senkrecht (Stanzwinkel 90°) zum Rand des jeweiligen Jochabschnitts 6 der benachbarten Zähne 2 verlaufen. Jede Kerbe 14 durchtrennt das aus den Jochabschnitten 6 jedes Zahns 2 gebildete Gesamtjoch nicht vollständig.

Wie der vergrößerte Abschnitt VII in FIG 7 zeigt, stellt die Kerbe 14 eine längliche Ausstanzung dar, die nicht vollständig bis zum Rand der jeweiligen Jochabschnitte 6 führt. Dadurch ergibt sich zwischen der Spitze der Kerbe 14 und dem Rand der benachbarten Jochabschnitte 6 ein Steg 12, der als Scharnier dienen kann. Dies ermöglicht es, Statorbleche für das Grundelement in linearer Form zu stanzen und danach in eine Kreisform zu bringen, wie dies in FIG 8 dargestellt ist. Abhängig vom gewünschten Durchmesser des Statorblechpakets kann eine Reihe von Zähnen 2 mit entsprechender Länge gefertigt und abgetrennt werden. Die Zahl der Zahnelemente ergibt den jeweiligen Durchmesser des Statorblechpakets. Die gestanzten Blechelemente können erst gestapelt und dann gebogen werden oder umgekehrt.

In FIG 8 ist dargestellt, dass sich durch das Biegen der einzelnen Zähne 2 um die jeweiligen Stege 12 keilförmige Aussparungen 15 ergeben. Mittels AM können die Aussparungen 15 durch entsprechende Erweiterungsabschnitte 16 gefüllt werden. Die Erweiterungsabschnitte 16 sollten eine ausreichend hohe Permeabilität besitzen, um die Jochfunktionalität erfüllen zu können. Gegebenenfalls können in die keilförmigen Aussparungen 15 auch entsprechende Kühleinrichtungen wie Kühlkanäle durch AM integriert werden.

## Patentansprüche

1. Blechpaket für eine elektrische Maschine mit
- einem Grundelement, welches
- eine Aneinanderreihung von Grund-Dynamoblechen und
- mehrere Zähne (2) zum Tragen jeweils einer Wicklung aufweist,
**gekennzeichnet durch**
- einen Erweiterungsabschnitt (9,13,16), der an einem der Zähne (2) des Grundelements durch ein generatives Fertigungsverfahren angeformt ist, wobei das generative Fertigungsverfahren ein additives Verfahren bzw. Rapid Prototyping ist, wobei der Erweiterungsabschnitt (9,13,16) aus mehreren Einzelabschnitten besteht, von denen jeder einzelne an ein jeweiliges der Grund-Dynamobleche separat durch das generative Fertigungsverfahren angeformt ist, so dass die Erweiterungsabschnitte schichtartig ausgebildet sind.

2. Blechpaket nach Anspruch 1, wobei der Erweiterungsabschnitt (9,13,16) aus einem magnetisch leitfähigen Material gebildet ist oder magnetisch leitfähige Partikel aufweist.

3. Blechpaket nach einem der vorhergehenden Ansprüche, wobei der eine der Zähne (2) einen Jochabschnitt (6) und davon abstehend einen Zahnschaft (5) aufweist, und der mindestens eine Erweiterungsabschnitt (9,13,16) an dem Jochabschnitt (6) und/oder dem Zahnschaft (5) angeformt ist.

4. Blechpaket nach einem der vorhergehenden Ansprüche, wobei der eine der Zähne (2) einen Zahnkopf (10) aufweist und der Erweiterungsabschnitt (9,13,16) zumindest einen Teil des Zahnkopfs (10) bildet.

5. Blechpaket nach einem der vorhergehenden Ansprüche, wobei in dem Erweiterungsabschnitt (9,13,16) ein Kühlkanal (8) ausgebildet ist.

6. Blechpaket nach einem der Ansprüche 3 bis 5, wobei der Jochabschnitt (6) und/oder der Zahnschaft (5) jeweils eine Aussparung (7,11) aufweist, welche durch den Erweiterungsabschnitt (9,13,16) ganz oder teilweise gefüllt ist.

7. Blechpaket nach Anspruch 6, wobei die Aussparung (7,11) asymmetrisch zu einer Mittelachse des jeweiligen Zahnschafts (5) angeordnet ist.

8. Blechpaket nach Anspruch 6 oder 7, wobei die Aussparung (7,11) mit mehreren verschiedenen Materialien gefüllt ist.

9. Blechpaket nach einem der vorhergehenden Ansprüche, wobei der Erweiterungsabschnitt (9,13,16) als Befestigungselement ausgebildet ist.

10. Blechpaket nach einem der Ansprüche 6 bis 9, wobei mit Hilfe des Erweiterungsabschnitts (9,13,16) ein Sensor in die Aussparung (7,11) gebettet ist.

11. Blechpaket nach einem der Ansprüche 6 bis 10, wobei an den Jochabschnitt (6) des einen der Zähne (2) unmittelbar ein weiterer Jochabschnitt (6) eines weiteren der Zähne (2) angrenzt, und der Erweiterungsabschnitt (9,13,16) einen Keil zwischen dem Jochabschnitt (6) und dem weiteren Jochabschnitt (6) bildet.

12. Elektrische Maschine mit einem Blechpaket nach einem der vorhergehenden Ansprüche, die insbesondere als Synchronmaschine, Asynchronmaschine oder Reluktanzmaschine ausgebildet ist.

13. Maschinenfamilie mit zumindest
- einer ersten elektrischen Maschine nach Art der elektrischen Maschine von Anspruch 12, und
- einer zweiten elektrischen Maschine nach Art der elektrischen Maschine von Anspruch 12,
wobei die elektrischen Maschinen, insbesondere beide elektrischen Maschinen, das gleiche Grundelement, aber unterschiedliche Erweiterungsabschnitte (9,13,16) aufweisen.

14. Verfahren zum Herstellen eines Blechpakets für eine elektrische Maschine durch
- Ausstanzen oder Ausschneiden von Grund-Dynamoblechen und
- Bilden eines Grundelements durch Aneinanderreihung der ausgestanzten oder ausgeschnittenen Grund-Dynamobleche, wobei
- das Grundelement mehrere Zähne (2) zum Tragen jeweils einer Wicklung aufweist,
**gekennzeichnet durch** Anformen eines Erweiterungsabschnitts (9,13,16) an einen der Zähne (2) des Grundelements durch ein generatives Fertigungsverfahren, wobei das generative Fertigungsverfahren ein additives Verfahren bzw. Rapid Prototyping ist, wobei der Erweiterungsabschnitt (9,13,16) aus mehreren Einzelabschnitten besteht, von denen jeder einzelne an ein jeweiliges der Grund-Dynamobleche separat durch das generative Fertigungsverfahren angeformt ist, so dass die Erweiterungsabschnitte schichtartig ausgebildet sind.

## Claims

1. Laminated core for an electric machine having
- a base element, which has
- a sequence of base electrical steel laminations and
- multiple teeth (2) for carrying one winding each, **characterized by**
- an extension section (9, 13, 16), which is integrally formed on one of the teeth (2) of the base element by a generative manufacturing method, wherein the generative manufacturing method is an additive method or rapid prototyping, wherein the extension section (9, 13, 16) consists of multiple individual sections, each individual one of which is separately integrally formed on a respective one of the base electrical steel laminations by the generative manufacturing method, such that the expansion sections are formed in the manner of layers.

2. Laminated core according to Claim 1, wherein the extension section (9, 13, 16) is formed from a magnetically conductive material or has magnetically conductive particles.

3. Laminated core according to either one of the preceding claims, wherein one of the teeth (2) has a yoke portion (6) and a tooth shaft (5) protruding therefrom, and the at least one extension portion (9, 13, 16) is integrally formed on the yoke portion (6) and/or the tooth shaft (5).

4. Laminated core according to any one of the preceding claims, wherein one of the teeth (2) has a tooth head (10) and the extension portion (9, 13, 16) forms at least a part of the tooth head (10).

5. Laminated core according to any one of the preceding claims, wherein a cooling channel (8) is formed in the expansion section (9, 13, 16).

6. Laminated core according to any one of Claims 3 to 5, wherein each yoke section (6) and/or tooth shaft (5) has a recess (7, 11), which is completely or partially filled by the extension section (9, 13, 16).

7. Laminated core according to Claim 6, wherein the recess (7, 11) is arranged asymmetrically with respect to a central axis of the respective tooth shaft (5).

8. Laminated core according to Claim 6 or 7, wherein the recess (7, 11) is filled with several different materials.

9. Laminated core according to any one of the preceding claims, wherein the expansion section (9, 13, 16) is in the form of a securing element.

10. Laminated core according to any one of Claims 6 to 9, wherein a sensor is embedded in the recess (7, 11) by means of the extension section (9, 13, 16).

11. Laminated core according to any one of Claims 6 to 10, wherein an additional yoke section (6) of one of the teeth (2) directly adjoins the yoke section (6) of another of the teeth (2), and the extension section (9, 13, 16) forms a wedge between the yoke section (6) and the additional yoke section (6).

12. Electric machine having a laminated core according to any one of the preceding claims, which electric machine is designed, in particular, as a synchronous machine, an asynchronous machine or a reluctance machine.

13. Machine family having at least
- a first electric machine in the style of the electric machine of Claim 12, and
- a second electric machine in the style of the electric machine of Claim 12,
wherein the electric machines, in particular both electric machines, have the same base element, but different extension sections (9, 13, 16).

14. Method for producing a laminated core for an electric machine by
- punching or cutting out base electrical steel laminations and
- forming a base element by stringing together the punched or cut-out base electrical steel laminations, wherein
- the base element has multiple teeth (2) for carrying one winding each,
**characterized by** integrally forming an extension section (9, 13, 16) on one of the teeth (2) of the base element by a generative manufacturing method, wherein the generative manufacturing method is an additive method or rapid prototyping, wherein the extension section (9, 13, 16) consists of multiple individual sections, each individual one of which is separately integrally formed on a respective one of the base electrical steel laminations by the generative manufacturing method, such that the expansion sections are formed in the manner of layers.

## Revendications

1. Paquet de tôles pour une machine électrique avec
- un élément de base, lequel comporte
- une juxtaposition de tôles de dynamo de base et
- plusieurs dents (2) destinées à supporter respectivement un enroulement,
**caractérisé par**
- une section d'évasement (9, 13, 16), qui est formée sur une des dents (2) de l'élément de base par un procédé de fabrication génératif, le procédé de fabrication génératif étant un procédé additif ou un prototypage rapide, la section d'évasement (9, 13, 16) étant constituée de plusieurs sections individuelles dont chaque section d'extension individuelle est formée séparément par le procédé de fabrication génératif sur une tôle respective des tôles de dynamo de base de telle sorte que les sections d'évasement sont réalisées de manière stratifiée.

2. Paquet de tôles selon la revendication 1, la section d'évasement (9, 13, 16) étant formée à partir d'un matériau magnétiquement conducteur ou comportant des particules magnétiquement conductrices.

3. Paquet de tôles selon l'une des revendications précédentes, une des dents (2) comportant une section de culasse (6) et, dépassant de celle-ci, une tige de dent (5), et l'au moins une section d'évasement (9, 13, 16) étant formée sur la section de culasse (6) et/ou la tige de dent (5).

4. Paquet de tôles selon l'une des revendications précédentes, une des dents (2) comportant une tête (10) de dent et la section d'évasement (9, 13, 16) formant au moins une partie de la tête (10) de dent.

5. Paquet de tôles selon l'une des revendications précédentes, un canal de refroidissement (8) étant réalisé dans la section d'évasement (9, 13, 16).

6. Paquet de tôles selon l'une des revendications 3 à 5, la section de culasse (6) et/ou la tige de dent (5) comportant chacune un évidement (7, 11), qui est rempli en totalité ou en partie par la section d'évasement (9, 13, 16).

7. Paquet de tôles selon la revendication 6, l'évidement (7, 11) étant disposé de manière symétrique à un axe central de la tige de dent (5) respective.

8. Paquet de tôles selon la revendication 6 ou 7, l'évidement (7, 11) étant rempli par plusieurs matériaux différents.

9. Paquet de tôles selon l'une des revendications précédentes, la section d'évasement (9, 13, 16) étant réalisée comme un élément de fixation.

10. Paquet de tôles selon l'une des revendications 6 à 9, un capteur étant intégré dans l'évidement (7, 11) à l'aide de la section d'évasement (9, 13, 16).

11. Paquet de tôles selon l'une des revendications 6 à 10, une autre section de culasse (6) d'une autre des dents (2) jouxtant directement la section de culasse (6) d'une des dents (2), et la section d'évasement (9, 13, 16) formant une clavette entre la section de culasse (6) et l'autre section de culasse (6).

12. Machine électrique avec un paquet de tôles selon l'une des revendications précédentes, qui est réalisée en particulier comme une machine synchrone, une machine asynchrone ou une machine à reluctance.

13. Famille de machines avec au moins
- une première machine électrique à la manière de la machine électrique selon la revendication 12, et
- une deuxième machine électrique à la manière de la machine électrique selon la revendication 12,
les machines électriques, en particulier les deux machines électriques, comportant le même élément de base, toutefois des sections d'évasement (9, 13, 16) différentes.

14. Procédé de fabrication d'un paquet de tôles pour une machine électrique par
- estampage ou découpage de tôles de dynamo de base et
- formation d'un élément de base par juxtaposition des tôles de dynamo de base estampées ou découpées,
- l'élément de base comportant plusieurs dents (2) destinées à supporter chacune un enroulement,
**caractérisé par** la formation d'une section d'évasement (9, 13, 16) sur une des dents (2) de l'élément de base par un procédé de fabrication génératif, le procédé de fabrication génératif étant un procédé additif ou un prototypage rapide, la section d'évasement (9, 13, 16) étant constituée de plusieurs sections individuelles, dont chacune est formée séparément par le procédé de fabrication génératif sur une tôle de dynamo de base respective des tôles de dynamo de base si bien que les sections d'évasement sont réalisées de manière stratifiée.
